Europäisches Patentamt

European Patent Office

Office européen des brevets

(19)

(11) Numéro de publication: **0 159 262**
**A1**

(12) **DEMANDE DE BREVET EUROPEEN**

(21) Numéro de dépôt: 85400642.6

(22) Date de dépôt: 01.04.85

(51) Int. Cl.⁴: **F 24 C 7/08**

(30) Priorité: 03.04.84 FR 8405229

(43) Date de publication de la demande:
23.10.85 Bulletin 85/43

(84) Etats contractants désignés:
BE DE FR GB IT NL

(71) Demandeur: COMPAGNIE EUROPEENNE POUR
L'EQUIPEMENT MENAGER "CEPEM"
74, rue du Surmelin
F-75020 Paris(FR)

(72) Inventeur: Gelineau, Jean-Marie
THOMSON-CSF SCPI 173, bld Haussmann
F-75379 Paris Cedex 08(FR)

(72) Inventeur: Gouardo, Didier
THOMSON-CSF SCPI 173, bld Haussmann
F-75379 Paris Cedex 08(FR)

(74) Mandataire: Grynwald, Albert et al,
THOMSON-CSF SCPI 173, Bld Haussmann
F-75379 Paris Cedex 08(FR)

(54) Dispositif de sélection des séquences et/ou de la température d'un appareil de cuisson.

(57) La présente invention concerne un dispositif de sélection (1) des séquences et/ou de la température d'un appareil de cuisson muni d'un bandeau frontal comportant au moins un commutateur de sélection (10), une commande électronique (6) réalisant en outre le codage des différentes positions du ou des commutateurs de sélection (10), caractérisé en ce qu'il comprend un moteur électrique (2), un commutateur de puissance rotatif (4) et/ou un thermostat rotatif (5), un commutateur de position (3) réalisant le codage des différentes positions angulaires du commutateur de puissance (4) et/ou du thermostat (5), le commutateur de position (3) et le commutateur de puissance (4) et/ou le thermostat (5) étant entraînés par le moteur (2) piloté par la commande électronique (6), cette commande étant reliée électriquement au commutateur de position (3) pour comparer le codage des différentes positions angulaires du commutateur de puissance et/ou du thermostat avec le codage des différentes positions d'un commutateur de sélection.

Cette invention est principalement utilisée dans les appareils de cuisson domestiques.

FIG.1

Dispositif de sélection des séquences et/ou de la température d'un appareil de cuisson

La présente invention concerne un dispositif de sélection des séquences et/ou de la température d'un appareil de cuisson.

Dans les appareils de cuisson, la sélection des différentes séquences ou de la température de fonctionnement, s'effectue à l'aide de commutateurs de sélection mis à la disposition d'un utilisateur sur le bandeau frontal de ces appareils.

Dans l'axe de ces commutateurs de sélection, sont placés des commutateurs de puissance rotatifs qui provoquent la mise sous tension sélective des différentes résistances de chauffage et/ou des thermostats rotatifs qui règlent la température.

Pour des raisons de sécurité et dans un souci d'économie de longueur des câblages de puissance, les constructeurs ont été amenés à supprimer les circuits de puissance au niveau du bandeau et à placer ceux-ci au niveau de l'arrière des appareils.

Une solution connue et généralement employée, consiste à placer dans les circuits de puissance de nombreux relais électromécaniques qui provoquent la mise sous tension sélective des différentes résistances de chauffage ou la régulation de la température.

Les bobines de ces relais sont bien entendu commandées par les commutateurs de sélection ou des circuits électroniques.

Mais l'utilisation de relais électromécaniques augmente de manière substantielle le prix de revient de ces appareils.

La présente invention a pour but de supprimer quasiment tous les relais électromécaniques et d'utiliser les commutateurs de puissance rotatifs et les thermostats rotatifs de l'art antérieur, mais placés à l'arrière des appareils pour répondre aux normes de sécurité et pour économiser la longueur des câblages de puissance.

La présente invention a pour objet un dispositif de sélection des séquences et/ou de la température d'un appareil de cuisson muni d'un bandeau frontal comportant au moins un commutateur de sélection, une commande électronique réalisant en outre le codage des différentes positions du ou des commutateurs de sélection, caractérisé en ce qu'il comprend un moteur électrique, un commutateur de puissance rotatif et/ou un thermostat rotatif, un commutateur de position réalisant le codage des différentes positions angulaires du commutateur de puissance et/ou du thermostat, le commutateur de position et le commutateur de puissance et/ou le thermostat étant entraînés par le moteur piloté par la commande électronique, cette commande étant reliée électriquement au commutateur de position pour comparer le codage des différentes positions angulaires du commutateur de puissance et/ou du thermostat avec le codage des différentes positions d'un commutateur de sélection.

Avantageusement, le commutateur de position comporte une plaque fixe servant de support à un circuit imprimé et une pièce tournante servant de support à des balais, les différentes positions angulaires du commutateur de puissance et/ou du thermostat étant codées sur le circuit imprimé.

Selon un mode de rélisation de l'invention, le commutateur de sélection est un bouton de manoeuvre à positions fixes et la commande électronique est un microprocesseur ou un comparateur.

Selon un autre mode de réalisation de l'invention, le commutateur de sélection est un bouton-poussoir et la commande électronique est un microprocesseur, le bouton-poussoir et la commande électronique étant associés à un moyen d'affichage permettant à l'utilisateur de contrôler son action sur le bouton-poussoir.

Il est décrit ci-après, à titre d'exemple et en référence aux dessins annexés, un dispositif de sélection selon l'invention.

La figure 1 représente une vue schématique d'un dispositif de sélection selon l'invention ainsi qu'un mode de réalisation d'un commutateur de sélection.

La figure 2 représente une vue schématique d'un autre mode de réalisation d'un commutateur de sélection.

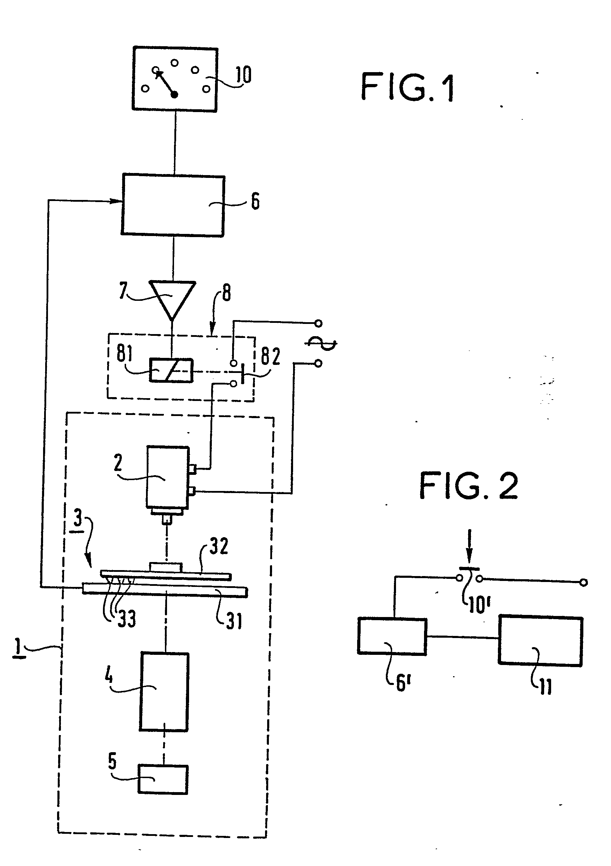

Dans la figure 1 il est représenté un dispositif de sélection 1 comportant un moteur électrique 2, un commutateur de position 3, un commutateur de puissance rotatif 4 et un thermostat rotatif 5 reliés électriquement à des résistances de chauffage non représentées, le commutateur de position 3 réalisant le codage des différentes positions angulaires du commutateur de puissance et/ou du thermostat.

Bien entendu, ce dispositif peut comporter uniquement un commutateur de puissance pour constituer un dispositif de sélection des séquences ou uniquement un thermostat pour constituer un dispositif de sélection de la température.

Le commutateur de position 3 comporte une plaque fixe 31 servant de support à un circuit imprimé, et une pièce tournante 32 entraînée par le moteur 2 et servant de support à des balais 33 qui frottent sur les pistes du circuit imprimé.

Chaque position du commutateur de puissance et/ou du thermostat est codée sur le circuit imprimé avec 4 pas (16 positions maximales).

Le moteur électrique 2 est commandé par un relais électromécanique 8 qui comporte un contact 82 permettant l'alimentation du moteur par le réseau, et une bobine 81 reliée à un amplificateur 7 lui-même relié à une commande électronique 6. Le circuit imprimé de la plaque fixe 31 est également relié électriquement à la commande électronique 6. Cette commande électronique, qui peut être un micro-processeur ou un comparateur, reçoit des instructions d'un commutateur de sélection qui est, dans le cas de cette figure, un bouton de manoeuvre 10 à positions fixes.

Dans la figure 2, le commutateur de sélection est un bouton-poussoir 10', et dans ce cas, la commande électronique est un microprocesseur 6'. L'appareil doit alors comporter un afficheur 11 permettant à l'utilisateur de visualiser et de contrôler son action sur le bouton-poussoir 10'.

Une opération de sélection s'effectue de la manière suivante :

L'opérateur choisit une séquence en tournant le bouton de manoeuvre 10 ou en appuyant sur le bouton-poussoir 10' jusqu'à ce qu'apparaisse sur l'afficheur 11 la séquence choisie. La position du commutateur de sélection 10 ou 10' est codée sur la commande électronique 6 qui pilote, par l'intermédiaire de l'amplificateur 7 et du relais 8, la rotation du moteur 2. Le commutateur de puissance 4, tourne et sélectionne une séquence et le thermostat 5 tourne et sélectionne une température. La pièce 32 de support de balais tourne également et indique à la commande électronique, la position angulaire du commutateur de puissance et du thermostat. La commande électronique compare alors le code de cette position angulaire avec le code de la position du commutateur de sélection, et si les deux codes ne sont pas identiques, la rotation du moteur, donc la rotation du commutateur de puissance et du thermostat, se poursuit jusqu'à ce que les deux codes soient identiques.

REVENDICATIONS

1/ Dispositif de sélection (1) des séquences et/ou de la température d'un appareil de cuisson muni d'un bandeau frontal comportant au moins un commutateur de sélection (10, 10'), une commande électronique (6, 6') réalisant en outre le codage des différentes positions du ou des commutateurs de sélection (10, 10'), caractérisé en ce qu'il comprend un moteur électrique (2), un commutateur de puissance rotatif (4) et/ou un thermostat rotatif (5), un commutateur de position (3) réalisant le codage des différentes positions angulaires du commutateur de puissance (4) et/ou du thermostat (5), le commutateur de position (3) et le commutateur de puissance (4) et/ou le thermostat (5) étant entraînés par le moteur (2) piloté par la commande électronique (6, 6'), cette commande étant reliée électriquement au commutateur de position (3) pour comparer le codage des différentes positions angulaires du commutateur de puissance et/ou du thermostat avec le codage des différentes positions d'un commutateur de sélection.

2/ Dispositif de sélection selon la revendication 1, caractérisé en ce que le commutateur de position (3) comporte une plaque fixe (31) servant de support à un circuit imprimé et une pièce tournante (32) servant de support à des balais (33), les différentes positions angulaires du commutateur de puissance (4) et/ou du thermostat (5) étant codées sur le circuit imprimé.

3/ Dispositif de sélection selon au moins l'une des revendications 1 à 2, caractérisé en ce que le commutateur de sélection est un bouton de manoeuvre à positions fixes (10) et la commande électronique (6) est un microprocesseur ou un comparateur.

4/ Dispositif de sélection selon au moins l'une des revendications 1 à 2, caractérisé en ce que le commutateur de sélection est un bouton-poussoir (10') et la commande électronique (6') est un microprocesseur, le bouton-poussoir (10') et la commande électronique (6') étant associés à un moyen d'affichage (11) permettant à l'utilisateur de contrôler son action sur le bouton-poussoir.

—

0159262

FIG.1

FIG.2

0159262

**Office européen des brevets**

**RAPPORT DE RECHERCHE EUROPEENNE**

Numéro de la demande

EP  85 40 0642

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | FR-A-2 296 219 (DREEFS)<br>* En entier *<br><br>--- | 1,2,4 | F 24 C 7/08 |
| A | US-A-4 341 197 (BUTTS)<br>* Colonne 1, lignes 23-25; colonne 2, ligne 46 - colonne 3, ligne 35 *<br><br>----- | 3,4 | |

DOMAINES TECHNIQUES
RECHERCHES (Int. Cl.4)

F 24 C
H 05 B

Le présent rapport de recherche a été établi pour toutes les revendications

| Lieu de la recherche | Date d'achèvement de la recherche | Examinateur |
|---|---|---|
| LA HAYE | 14-06-1985 | PINEAU A.C. |